# EUROPÄISCHE PATENTSCHRIFT

(11) **EP 3 527 760 B1**
(45) Veröffentlichungstag und Bekanntmachung des Hinweises auf die Patenterteilung: **23.03.2022**
(21) Anmeldenummer: 18210643.5
(22) Anmeldetag: 06.12.2018
(51) Int. Cl.: E05C 1/04, E05B 17/22, F16B 21/16

(54) **RASTBOLZEN**
LOCKING PIN
BOULON D'ARRÊT

(30) Priorität: 20.02.2018 DE 202018100923 U
(43) Veröffentlichungstag der Anmeldung: 21.08.2019
(73) Patentinhaber: Otto Ganter GmbH & Co. KG Normteilefabrik, 78120 Furtwangen (DE)
(72) Erfinder: HOFMANN, Thilo, 78120 Furtwangen (DE)
(74) Vertreter: Riebling, Peter

(56) Entgegenhaltungen:
- EP-A2- 2 450 509
- WO-A1-03/062571
- CN-B- 102 155 128
- US-A1- 2015 061 300

## Beschreibung

Gegenstand der Erfindung ist ein Rastbolzen nach dem Oberbegriff des Patentanspruches 1, 5 oder 7.

Ein handbetätigter Rastbolzen ist beispielsweise in der DE 10 2012 112 610 A1 offenbart und besteht aus einer Hülse und einem in der Hülse gelagerten Bolzen, der ein Verriegelungsende und ein Betätigungsende aufweist, wobei der Bolzen zwischen einer ersten axialen Endposition und einer zweiten axialen Endposition innerhalb der Hülse axial verschiebbar gelagert ist.

Dabei kann der Bolzen zumindest in einer axialen Endposition gegenüber der Hülse mit einem Rastmechanismus rastend oder mit Magnetelementen magnetisch zeitweise oder dauerhaft festlegbar sein.

Weiterhin kann der Rastbolzen über eine selbsttätige Rückstellung verfügen und dadurch eine Grundstellung haben.

Ob der Rastbolzen zur Betätigung bzw. zur Ver- oder Entriegelung durch Drücken oder Ziehen des Betätigungselements, beispielsweise einem Knopf, bewegt wird, hängt vom Einbauort des rückstellenden Elements, z. B. einer Druck- oder Zugfeder ab.

Nachteilig an diesem Rast-Bolzen ist es, dass es ohne den Rastbolzen händisch zu betätigen bzw. diesen in Augenschein zu nehmen, nicht möglich ist zu bestimmen, in welcher Position sich der Bolzen befindet. Wenn der Rastbolzen dazu verwendet wird ein Bauteil, wie z.B. eine Klappe an einem Maschinengehäuse zu fixieren, ist es jedoch notwendig zu bestimmen, ob sich der Rastbolzen in seiner axialen Verriegelungsposition befindet oder ob diese aufgehoben ist. Nur so kann man sicher gehen, dass das Bauteil sicher verriegelt bzw. entriegelt ist.

Mit den Rastbolzen nach dem Stand der Technik ist es jedoch nur möglich, über haptische oder visuelle Wahrnehmung die Position des Rastbolzens zu erfassen.

Auch wenn sich der Bolzen scheinbar in seiner Verriegelungsposition befindet oder die Sicht auf den Bolzen von einem anderen Bauteil verdeckt ist, ist es von einem entfernten Standpunkt aus nicht möglich zu bestimmen, ob der Rastbolzen wirklich in seiner Verriegelungsposition eingerastet und festgelegt ist. So könnte sich der Rastbolzen beispielsweise durch Vibration aus seiner Ver- oder Entriegelungsstellung lösen, ohne dass dies bemerkt wird.

Die US 2015/061300A1 und die CN 102 155 128 B offenbaren einen handbetätigten Rastbolzen mit zwei einer Bolzenführung und einem zwischen den Bolzenführungen axial verschiebbar gelagerten Bolzen, der ein Verriegelungsende und ein Betätigungsende, mit einem am Bolzen angeordneten Betätigungselement, aufweist, wobei der Bolzen zwischen einer ersten axialen Endposition oder einer zweiten axialen Endposition zwischen den Bolzenführungen axial verschiebbar gelagert und ist, wobei zwischen den Bolzenführungen mindestens ein Sensor befestigt ist, der die beiden axialen Endpositionen des Bolzens, durch einen mit dem Bolzen mitgeführten Permanentmagneten erfasst. Nachteilig an diesen Rastbolzen ist es jedoch, dass keine genaue Position des Bolzens gegenüber der Bolzenführung möglich ist.

Gerade bei sicherheitsrelevanten Abfragen an großen Anlagen ist es erforderlich, die genaue Position des Rastbolzens zu jeder Zeit zu bestimmen. Aufgabe der vorliegenden Erfindung ist es somit, einen Rastbolzen der bekannten Art derart weiterzuentwickeln, dass eine Positionsabfrage der Stellposition des Rastbolzens auch von einem entfernten Standpunkt eines Benutzers möglich ist.

Die vorliegende Erfindung löst diese Aufgabe mit dem kennzeichnenden Teil des Patentanspruches 1 sowie mit den Patentsprüchen 5 und 7, während weitere Ausgestaltungen der Erfindung in den Unteransprüchen angegeben sind.

Wesentliches Merkmal ist, dass ein Rastbolzen mit einer Positionsabfrage verwendet wird, die es ermöglicht zu bestimmen, ob der Rastbolzen ein-und / oder ausgerastet bzw. ver- und / oder entriegelt ist. Dabei erfasst ein Sensor die vordere (Verriegelungsposition) oder hintere Endposition (Entriegelungsposition) oder beide Positionen des Bolzens. Dazu ist an der Bolzenführung mindestens ein Sensor befestigt, der die beiden axialen Endpositionen des Bolzens als Messgröße erfasst und daraus ein weiterverarbeitbares hydraulisches, pneumatisches oder vorzugsweise elektrisches Signal erzeugt.

Dazu wird ein Sensor verwendet, der die Position eines in einer Bolzenführung beweglichen Bolzens erkennt und in ein Messsignal umwandelt.

Ein solcher Sensor reagiert berührungsfrei auf Annäherung, d.h. ohne direkten Kontakt.

Mit der vorliegenden Erfindung wird die Verwendung folgender Näherungssensoren beansprucht:
- Induktive Sensoren: Diese reagieren sowohl bei ferromagnetischen als auch bei nichtmagnetischen metallischen Gegenständen.
- Magnetische Sensoren (z. B. Reedschalter, Reedkontakt oder auch Hallsensoren): Diese reagieren auf ein Magnetfeld.

Im Folgenden wird die Erfindung anhand eines magnetischen Sensortyps beschrieben, der auf ein Magnetfeld reagiert. Dazu ist in einer Ausführungsform ein Permanentmagnet an dem beweglichen Teil des Rastbolzens angebracht, der sich je nach Stellposition des Rastbolzens in unterschiedlich großen Abständen zum jeweiligen Sensor befindet. Ein magnetischer Sensor hat den Vorteil, dass er auch unter erschwerten Bedingungen wie Hitze, Staub und Vibrationen - und sogar durch nichtferromagnetische Objekte hindurch - funktionieren kann.

In einer Ausführungsform ist in oder an das Betätigungselement, welches am Betätigungsende des Bolzens zur Verschiebung des Bolzens in der Bolzenführung verwendet wird, ein Magnet integriert. Ein solches Betätigungselement kann beispielsweise als Betätigungsknopf ausgebildet sein. Die vorliegende Erfindung ist jedoch nicht auf die Ausführung eines Betätigungsknopfes beschränkt, auch ein Hebel oder ein Riegel oder ein T-Griff bzw. jegliches weiteres Betätigungselement mit oder ohne Handgriff wird mit der vorliegenden Erfindung beansprucht.

Der verwendete Magnet kann ringförmig oder auch nur segmentartig in dem Betätigungselement integriert sein. Hierauf ist die vorliegende Erfindung jedoch nicht beschränkt. Auch die Verwendung eines halbkreisförmigen Magneten oder eines punktuell angeordneten Magneten wird mit der vorliegenden Erfindung beansprucht.

Der verwendete Magnet kann beispielsweise ein Neodym-Magnet oder ein Ferrit-Magnet sein oder ist aus einem sonstigen Magnetwerkstoff gebildet.

In einer weiteren Ausführungsform ist das Betätigungselement selbst aus einem zumindest teilweise magnetischen Material gebildet. So kann das Betätigungselement in einem Sinterverfahren hergestellt sein, wobei feinkörnige keramische oder metallische Stoffe mit magnetischen Werkstoffen unter erhöhtem Druck erhitzt und verbunden werden. Ein magnetisches Material kann weiterhin auch beispielsweise in einem Spritzguss-Produktionsprozess bei der Herstellung des Betätigungsknopfes aus Kunststoff oder Elastomer eingebracht werden.

Im Folgenden wird die Erfindung jedoch anhand einer Ausführungsform beschrieben, in der der Rastbolzen in seinem knopfartigen Betätigungselement einen Ringmagneten aufweist, der axial oder diametral magnetisiert in Richtung der Bolzenführung wirkt. Bei Betätigung des Betätigungsknopfes, um den Bolzen in axialer Richtung in der Bolzenführung zu bewegen, wird der Ringmagnet relativ zu einem im Bereich der Bolzenführung angebrachten Sensors bewegt. Ein solcher Sensor ist im Bereich der Kontaktfläche angebracht, auf welcher die Unterseite des Betätigungsknopfes in Verriegelungsposition des Rastbolzens aufliegt. Der Sensor ist dazu in einem Sensorhalter eingebettet, der die Bolzenführung zumindest teilweise ringförmig umgibt. Bei Erkennung des Ringmagnetfeldes anhand des Sensors, gibt der Sensor bei Erreichen eines Schwellwertes ein Signal aus, welches die Verriegelungsposition des Bolzens angibt.

Bereits die Distanzierung oder Annäherung des Ringmagneten auf den Sensor kann auch von dem Sensor erfasst werden.

Der verwendete Sensor kann bei der Produktion des Bauteiles programmiert werden, sodass beispielsweise ein Schwellenwert von 2-6 Millitesla überschritten werden muss, ab dem der Sensor ein Signal aussendet.

Die Sensorbefestigung erfolgt, lösbar oder nicht lösbar, form-, reib- oder kraftschlüssig auf der Bolzenführung und kann aufgeschnappt bzw. geklippt, geklemmt, aufgesteckt, eingeschraubt oder mit einer zusätzlichen Sensorhalterung am Bauteil befestigt werden.

In einer weiteren Ausführungsform der Erfindung ist es vorgesehen, dass auf einen Sensorhalter verzichtet wird und sich der Sensor direkt im Mantel der Bolzenführung befindet. Dazu wird eine Aufnahmebohrung oder ähnliches in die Bolzenführung eingebracht, in welcher dann der Sensor eingeführt werden kann, um die Position des Bolzens zu bestimmen.

Die Aufnahme für den Sensor kann beispielsweise auch in das Bauteil direkt eingegossen sein.

Geeignet ist die erfindungsgemäße Vorrichtung für Bolzen mit oder ohne Rastsperre. Eine Rastsperre dient dazu den Betätigungsknopf in einer bestimmten Endposition zu fixieren. Wenn der Bolzen aus der Bolzenführung hinausgezogen wird, kann sich der Betätigungsknopf mit seiner Unterseite auf der Stirnseite einer hülsenförmig ausgebildeten Rastsperre legen. Der Betätigungsknopf weist dazu an seiner Unterseite mindestens eine Schulter auf, die einen zylindrischen Aufnahmeraum im Inneren des hohlen Betätigungsknopfes abschnittsweise unterbricht. Der Aufnahmeraum dient zur Aufnahme der hülsenförmig ausgebildeten Rastsperre, wenn sich die Unterseite des Betätigungsknopfes auf der Kontaktfläche befindet und der Rastbolzen in Verriegelungsposition ist.

Die Position des Betätigungsknopfes, in der die Schulter auf der hülsenförmig ausgebildeten Rastsperre aufliegt, lässt sich erst durch eine Drehung des Kopfes erreichen. Die Schulter wird soweit gedreht, bis sie eine axiale Kerbe in der Wandung der hülsenförmigen Rastsperre erreicht und in dieser aufgenommen wird.

So gelagert kann der Rastbolzen in der erreichten Endposition zeitweise oder dauerhaft verbleiben. Änderungen der Position in axialer Richtung sind nicht möglich.

Wird die Schulter abermals soweit gedreht, bis sie einen axialen Schlitz in der Wandung der hülsenförmigen Rastsperre erreicht und in diesem aufgenommen wird, so lässt sich der Kopf mit der Schulter wieder in Richtung der stirnseitigen Kontaktfläche der Bolzenführung bewegen.

In einer weiteren Ausführungsform der Erfindung befindet sich ein Sensor auf dem stirnseitigen Endbereich der hülsenförmigen Rastsperre und ein Magnet im Bereich der Schulter, um zu erkennen ob die Schulter aufliegt, um somit die Endposition- bzw. Rastposition des Rastbolzens zu bestimmten.

In einer weiteren Ausführungsform der Erfindung findet ein Positionssensor / oder Drehwinkelsensor im Bereich der Rastsperre Anwendung, der die Drehposition des Betätigungsknopfes bestimmt, wobei es erst zu einer Abfrage bei einer beispielsweise 90° Drehung kommen kann. Um zu bestimmen wie weit der Betätigungsknopf gedreht werden muss, bis die Schulter den Schlitz erreicht.

Auch das umgekehrte Wirkprinzip des erfindungsgemäßen Rastbolzens ist möglich, sodass nicht eine Betätigung durch Ziehen, sondern durch Drücken erforderlich ist. Bevorzug ist ein Federelement vorgesehen, das den Bolzen in eine axiale Endposition drückt.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Schutzanspruches bestimmt.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Schnittdarstellung eines Rastbolzens (1.Ausführung)
- Figur 2:: perspektivische Schnittdarstellung eines Rastbolzens (2.Ausführung)
- Figur 3:: perspektivische Schnittdarstellung eines Rastbolzens (3.Ausführung)
- Figur 4a, 4b:: perspektivische Schnittdarstellung eines Rastbolzens (1.Ausf.)
- Figur 5a, 5b:: perspektivische Schnittdarstellung eines Rastbolzens (1.Ausf.)
- Figur 6:: perspektivische Schnittdarstellung eines Rastbolzens (2. Ausführung)
- Figur 7a, 7b:: perspektivische Schnittdarstellung eines Rastbolzens (3.Ausf.)

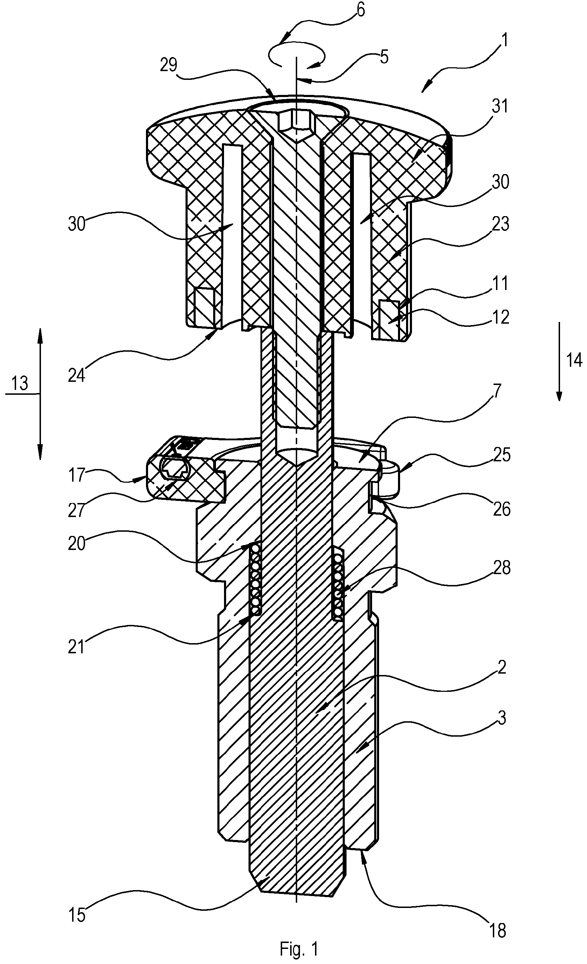

Figur 1 zeigt einen Rastbolzen 1 der aus einem Bolzen 2 besteht, der in einer Bolzenführung 3 in axialer Richtung geführt ist. Der Bolzen 2 wird hierbei entlang einer Achse 5 bewegt und kann auch um diese Achse in Drehrichtung 6 gedreht werden.

Der Bolzen besitzt ein Verriegelungsende 15 und ein Betätigungsende 31, welche in Figur 1 mit einem Betätigungsknopf 23 versehen ist. Die vorliegende Erfindung ist jedoch nicht auf die Ausführung eines Betätigungsknopfes beschränkt, auch ein Hebel oder ein Riegel oder ein T-Griff bzw. jegliches weiteres Betätigungselement wird mit der vorliegenden Erfindung beansprucht.

Über den Kopf 23 kann der Bolzen 2 in axialer Richtung entlang der Achse 5 in der Bolzenführung 3 bewegt werden und ist auch um diese Achse in Drehrichtung 6 drehbar.

Der Betätigungsknopf 23 weist eine Unterseite 24 auf, welche sich gegenüber einer Kontaktfläche 7 der Stirnseite der Bolzenführung 3 befindet.

An der Unterseite 24 weist der Betätigungsknopf 23 eine Ringnut 11 auf, in welcher ein Ringmagnet 12 aufgenommen ist.

In dem gezeigten Beispiel nach Figur 1 befindet sich der Betätigungsknopf 23 im Abstand 13 entfernt von der Kontaktfläche 7 der Bolzenführung 3. Dabei ist die Feder 28, welche auf der Ringschulter 21 des Bolzens 2 aufliegt, zwischen der Ringschulter und einem Absatz 20 im Inneren der Bolzenführung 3 komprimiert.

Die Bolzenführung 3 weist unterhalb der Kontaktfläche 7 eine Nut 26 auf, in welcher ein Sensorelement 17 eingebracht ist. Das Sensorelement 17 besteht aus einem Sensorhalter 25 und mindestens einem Sensor 27. Der Sensor 27 kann beispielsweise in einen kunststoffförmigen Halter eingespritzt sein.

Im gezeigten Beispiel nach Figur 1 ist das Sensorelement 17 in der Nut 26 unter Wirkung einer Klemmkraft gehalten. Die Klemmkraft wird durch die hufeisenförmige Ausformung des Sensorelements 17 erreicht, wobei das Sensorelement 17 auf die Bolzenführung im Bereich der ringförmigen Nut 26 aufgeschoben ist. Die Erfindung ist jedoch nicht auf die beschriebene Hufeisen-U-Form des Sensorhalters beschränkt, auch die Umfassung in Form eines Kreissegments ist möglich.

Neben der eingespritzten Ausführungsform des Sensors 17 in den Sensorhalter 25, kann der Sensor 17 auch beispielsweise in den Sensorhalter 25 eingesteckt sein, wie es die Ausführungsform nach Figur 1 zeigt. Der Sensorhalter 25 weist dafür eine Aufnahmebohrung auf, in welcher der Sensor 27 einführbar ist. Die Fixierung kann z. B. auch durch axiales Ein- oder Aufstecken oder durch verschließen mittels eines Kabelbinders lösbar oder dauerhaft verrastend umgesetzt sein.

Der Sensorhalter 25 besteht bevorzugt aus einem Kunststoff.

Im gezeigten Beispiel nach Figur 1 ist der Sensor dezentral in dem Sensorhalter eingebracht.

Wird der Betätigungsknopf 23 mit dem darin aufgenommenen Magneten 12 nun in Pfeilrichtung 14 in Richtung der Kontaktfläche 7 bewegt, erfasst der Sensor 27 diese Annäherung als Messgröße und formt daraus ein weiterverarbeitbares elektrisches, pneumatisches oder hydraulisches Signal, welches ausgewertet werden kann. Somit kann insbesondere der Kontakt des Betätigungsknopfes 23 mit seiner Unterseite 24 auf der Kontaktfläche 7 bestimmt und überwacht werden.

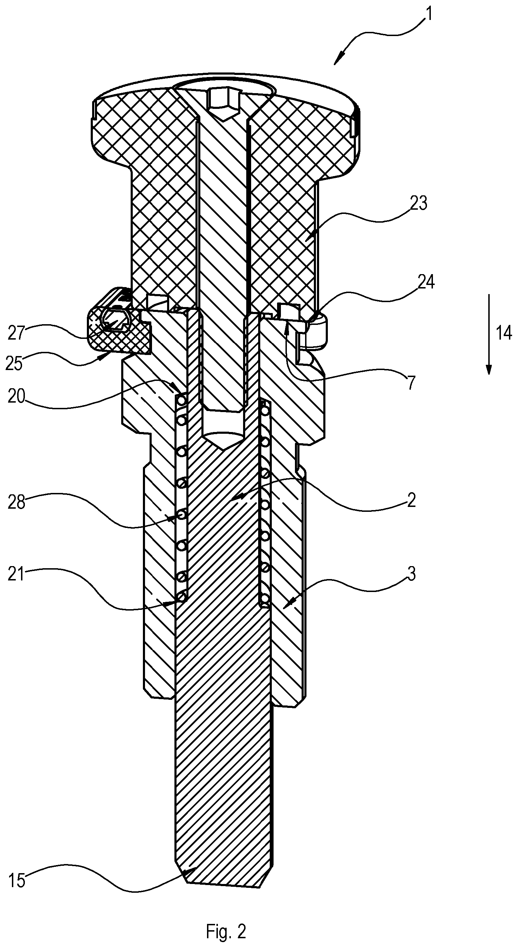

Figur 2 zeigt die Entriegelungsstellung der Erfindung. Diese wird durch ein Ziehen des Betätigungsknopf 23 bzw. des Betätigungselements erreicht, wodurch der Bolzen 2 derart in die Bolzenführung 3 hineingezogen wird, dass das Verriegelungsende 15 in der offenen Stirnseite 18 der Bolzenführung rückstehend eingezogen wird und damit eine Entriegelungsstellung einnimmt. Dabei ist die Feder 28, welche auf der Ringschulter 21 des Bolzens 2 aufliegt, zwischen der Ringschulter und einem Absatz 20 im Inneren der Bolzenführung 3 komprimiert. In dieser Position liegt der Betätigungsknopf 23 mit seiner Unterseite 24 auf Abstand zu der Kontaktfläche 7 der Bolzenführung 3. Der Sensor 27 erkennt die Position des Betätigungsknopfes 23 als abwesend und sendet entsprechend kein Signal.

Gegenüber der Figur 1 unterscheidet sich die Figur 2 in der dargestellten Position und weiterhin darin, dass auf einen einzelnen Magneten im Betätigungsknopf 23 verzichtet wird. In der Ausführungsform nach Figur 2 ist der gesamte Knopf 23 als magnetischer Körper ausgebildet.

Der Betätigungsknopf 23, der in diesem Ausführungsbeispiel keinen unterseitigen Ringmagneten aufweist, besteht selbst mindestens teilweise aus einem magnetischen Material. Ein solches magnetisches Material kann beispielsweise im Spritzguss des Produktionsprozesses des Betätigungsknopfes 23 eingebracht werden. Auch kann der Knopf in einem Sinterprozess hergestellt sein, wobei die magnetischen Partikel eingepresst werden.

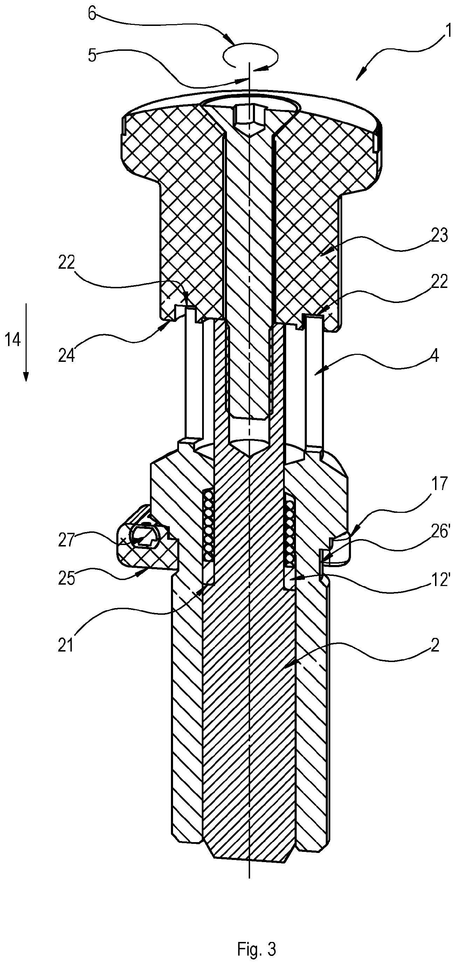

In der Ausführungsform nach Figur 3 befindet sich das Sensorelement 17 in der Nut 26', welche im mittleren Bereich der hülsenartigen Bolzenführung 3 angeordnet ist. Der Magnet 12' zur Bestimmung der Position des Bolzens 2 befindet sich nicht mehr im Knopf 23 sondern ist direkt am Außenumfang des Bolzens 2, im Inneren der Bolzenführung 3 angebracht.

Der Magnet 12' liegt dabei auf einer Ringschulter 21 des Bolzens 2 auf und ist somit zusammen mit dem Bolzen 2 in axialer Richtung im Inneren der Bolzenführung 3 beweglich.

Wird nun der Magnet 12' an dem Sensor 27 vorbeigeführt, erkennt dieser die Position des Magneten und kann die momentane bzw. entriegelte oder zurückgezogene Position des Bolzens 2 erkennen.

Der Rastbolzen 1 weist eine Rastsperre 4 auf, um den Betätigungsknopf 23 in einer bestimmten Endposition (Entriegelungsposition) zeitweise oder dauerhaft zu fixieren.

Wenn der Bolzen 2 entgegen der Pfeilrichtung 14 aus der Bolzenführung 3 hinausgezogen wird, kann sich der Knopf 23 mit seiner Unterseite 24 auf der Stirnseite der hülsenförmig ausgebildeten Rastsperre 4 legen. Der Knopf 23 weist dazu mindestens eine Schulter 22 auf, die einen zylindrischen Aufnahmeraum 30 abschnittsweise unterbricht. Der Aufnahmeraum 30 dient zur Aufnahme der hülsenförmig ausgebildeten Rastsperre 4, wenn sich die Unterseite des Betätigungsknopfes 23 auf der Kontaktfläche 7 befindet wie in Figur 2 gezeigt.

Die gezeigte Position des Betätigungsknopfes 23, in der die Schulter 22 auf der hülsenförmig ausgebildeten Rastsperre aufliegt, lässt sich erst durch eine Bewegung des Kopfes 23 entlang der Achse 5 entgegen der Pfeilrichtung 14 lösen. Sobald die Schulter 22 nicht mehr in Kontakt mit der Stirnseite der Rastsperre 4 ist, lässt sich der Knopf 23 um die Achse 5 drehen, bis die Schulter 22 einen Schlitz in der Wandung der hülsenförmigen Rastsperre 4 erreicht. Der Schlitz nimmt die Schulter 22 auf, während die Rastsperre in den Aufnahmeraum 30 eingeführt werden kann.

Somit kann der Knopf 23 wieder in Pfeilrichtung 14 in Richtung der stirnseitigen Kontaktfläche 7 der Bolzenführung 3 bewegt werden.

Rastbolzen die durch Drücken des Betätigungselements 23 den Bolzen 2 in Sperrstellung gebracht werden, ist eine Rastsperre z. B. durch eine J-förmig ausgestaltete Kurvenbahn realisierbar. Dazu wird das Betätigungselement 23 das in diesem Falle eine Nocke oder Nase im Inneren aufweist, im Anschluss an den axialen Hub in Richtung 14 durch drehen um die Achse 5 in die Rastposition gebracht, so dass die Rastposition ggf. gegen die Rückstellkraft der Feder dauerhaft oder zeitweise aufrecht erhalten bleibt.

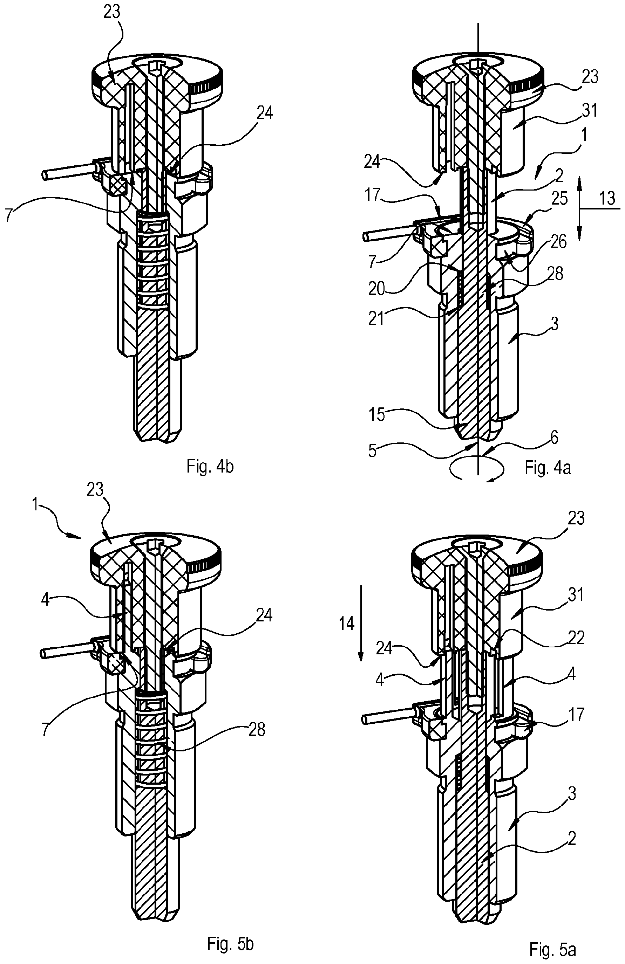

Die Figuren 4a und 4b zeigen den Rastbolzen 1 ohne Rastsperre wobei eine Abfrage im eingerasteten Zustand stattfindet. Der Rastbolzen 1 besteht aus dem Bolzen 2, der in der Bolzenführung 3 in axialer Richtung geführt ist. Der Bolzen 2 wird hierbei entlang der Achse 5 bewegt und kann auch um diese Achse in Drehrichtung 6 gedreht werden.

Der Bolzen besitzt ein Verriegelungsende 15 und ein Betätigungsende 31, welches in den Figuren 4a und 4b mit einem Betätigungsknopf 23 versehen ist. Über den Kopf 23 kann der Bolzen 2 in axialer Richtung entlang der Achse 5 in der Bolzenführung 3 bewegt werden.

Der Betätigungsknopf 23 weist eine Unterseite 24 auf, welche sich gegenüber der Kontaktfläche 7 der Stirnseite der Bolzenführung 3 befindet.

An der Unterseite 24 weist der Betätigungsknopf 23 eine Ringnut auf, in welcher ein Ringmagnet aufgenommen werden kann.

In dem gezeigten Beispiel nach Figur 4a befindet sich die Unterseite 24 des Betätigungsknopfes 23 im Abstand 13 entfernt von der Kontaktfläche 7 der Bolzenführung 3. Dabei ist die Feder 28, welche auf der Ringschulter 21 des Bolzens 2 aufliegt, zwischen der Ringschulter und einem Absatz 20 im Inneren der Bolzenführung 3 komprimiert.

Die Bolzenführung 3 weist unterhalb der Kontaktfläche 7 eine Nut 26 auf, in welcher ein Sensorelement 17 eingebracht ist. Das Sensorelement 17 besteht aus einem Sensorhalter 25 und mindestens einem Sensor.

Im gezeigten Beispiel nach Figur 4a ist das Sensorelement 17 in der Nut 26 unter Wirkung einer Klemmkraft gehalten. Die Klemmkraft wird durch die hufeisenförmige Ausformung des Sensorelements 17 erreicht, wobei das Sensorelement 17 auf die Bolzenführung im Bereich der ringförmigen Nut 26 aufgeschoben ist.

Wird der Betätigungsknopf 23 mit dem darin aufgenommenen Magneten 12 nun in Pfeilrichtung 14 in Richtung der Kontaktfläche 7 bewegt, erfasst der Sensor diese Annäherung als Messgröße und formt daraus ein weiterverarbeitbares elektrisches, pneumatisches oder hydraulisches Signal, welches ausgewertet werden kann. Somit kann insbesondere der Kontakt des Betätigungsknopfes 23, wie in Figur 4b gezeigt, mit seiner Unterseite 24 auf der Kontaktfläche 7 bestimmt und überwacht werden. Figur 4b zeigt somit die Endposition des Rastbolzens wenn der Abstand 13 aus Figur 4a null beträgt.

Die Figuren 5a und 5b zeigen den Rastbolzen nach den Figuren 4a und 4b, mit einer eingezeichneten Rastsperre 4.

Die Rastsperre 4 dient dazu den Betätigungsknopf 23 in einer bestimmten Endposition (Entriegelungsposition) zeitweise oder dauerhaft zu fixieren. Wenn der Bolzen 2 entgegen der Pfeilrichtung 14 aus der Bolzenführung 3 hinausgezogen wird, kann sich der Knopf 23 mit seiner Unterseite 24 auf der Stirnseite der hülsenförmig ausgebildeten Rastsperre 4 legen. Der Knopf 23 weist dazu mindestens eine Schulter 22 auf, die einen zylindrischen Aufnahmeraum 30 abschnittsweise unterbricht. Der Aufnahmeraum 30 dient zur Aufnahme der hülsenförmig ausgebildeten Rastsperre 4, wenn sich die Unterseite des Betätigungsknopfes 23 auf der Kontaktfläche 7 befindet wie in Figur 5b gezeigt.

Die gezeigte Position des Betätigungsknopfes 23, in der die Schulter 22 auf der hülsenförmig ausgebildeten Rastsperre aufliegt, lässt sich erst durch eine Bewegung des Kopfes 23 entlang der Achse 5 entgegen der Pfeilrichtung 14 lösen. Sobald die Schulter 22 nicht mehr in Kontakt mit der Stirnseite der Rastsperre 4 ist, lässt sich der Knopf 23 um die Achse 5 drehen, z.B. um 90°, bis die Schulter 22 einen Schlitz in der Wandung der hülsenförmigen Rastsperre 4 erreicht. Der Schlitz nimmt die Schulter 22 auf, während die Rastsperre in den Aufnahmeraum 30 eingeführt werden kann.

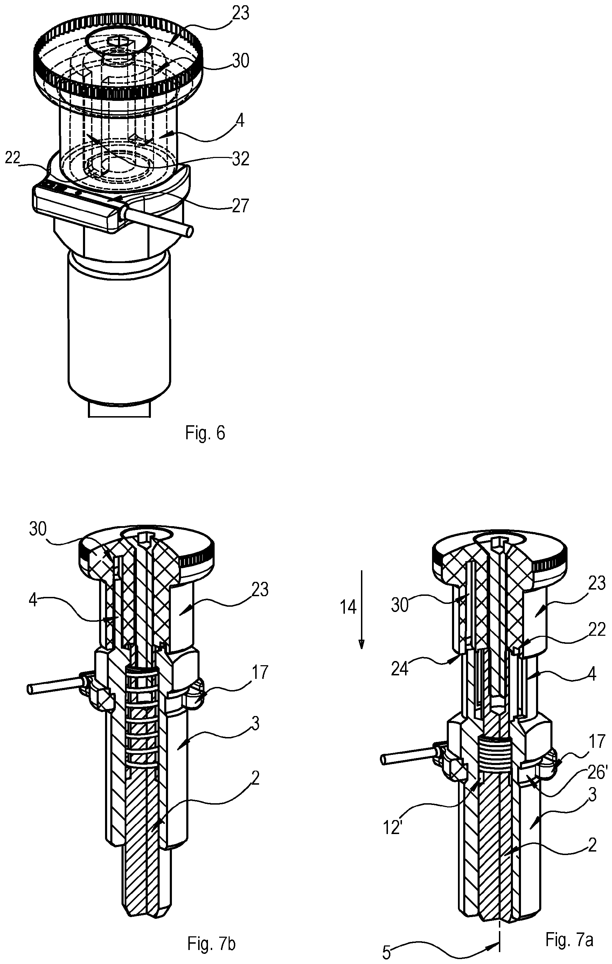

Somit kann der Knopf 23 wieder in Pfeilrichtung 14 in Richtung der stirnseitigen Kontaktfläche 7 der Bolzenführung 3 bewegt werden, wie es in Figur 5b gezeigt ist. Unterstützend wirkt hierbei die Feder 28, welche als Rückstellfeder wirkt. Gemäß Figur 5b befindet sich der Rastbolzen 1 in unbestätigter Position. Figur 6 zeigt den Rastbolzen nach Figur 3 in perspektivischer Ansicht. In dieser Position hat der Schlitz 32 in der Wandung der hülsenförmigen Rastsperre 4 die Schulter 22 des Betätigungsknopfes23 aufgenommen und die Rastsperre 4 ist in den Aufnahmeraum 30 eingeführt. Der verwendete Sensor 27 ist hierbei ein Magnetfeldsensor und der Betätigungsknopf ist magnetisch.

Figur 7a zeigt eine perspektivische Ansicht der Ausführungsform nach Figur 3, in der sich das Sensorelement 17 in der Nut 26' befindet, welche im mittleren Bereich der hülsenartigen Bolzenführung 3 angeordnet ist. Der Magnet 12' zur Bestimmung der Position des Bolzens 2 befindet sich nicht mehr im Knopf 23 sondern ist direkt am Außenumfang des Bolzens 2, im Inneren der Bolzenführung 3 angebracht.

Der Magnet 12' liegt dabei auf einer Ringschulter 21 des Bolzens 2 auf und ist somit zusammen mit dem Bolzen 2 in axialer Richtung im Inneren der Bolzenführung 3 beweglich.

Wird nun der Magnet 12' an dem Sensorelement 17 vorbeigeführt, erkennt dieser die Position des Magneten und kann die momentane bzw. entriegelte oder zurückgezogene/ entrastete Position des Bolzens 2 erkennen.

Der Rastbolzen 1 weist eine Rastsperre 4 auf, um den Betätigungsknopf 23 in einer bestimmten Endposition (Entriegelungsposition) zeitweise oder dauerhaft zu fixieren.

Wenn der Bolzen 2 entgegen der Pfeilrichtung 14 aus der Bolzenführung 3 hinausgezogen wird, kann sich der Knopf 23 mit seiner Unterseite 24 auf der Stirnseite der hülsenförmig ausgebildeten Rastsperre 4 legen. Der Knopf 23 weist dazu mindestens eine Schulter 22 auf, die einen zylindrischen Aufnahmeraum 30 abschnittsweise unterbricht. Der Aufnahmeraum 30 dient zur Aufnahme der hülsenförmig ausgebildeten Rastsperre 4, wenn sich die Unterseite des Betätigungsknopfes 23 auf der Kontaktfläche 7 befindet wie in Figur 7b gezeigt.

Die gezeigte Position des Betätigungsknopfes 23, in der die Schulter 22 auf der hülsenförmig ausgebildeten Rastsperre aufliegt, lässt sich erst durch eine Bewegung des Kopfes 23 entlang der Achse 5 entgegen der Pfeilrichtung 14 lösen. Sobald die Schulter 22 nicht mehr in Kontakt mit der Stirnseite der Rastsperre 4 ist, lässt sich der Knopf 23 um die Achse 5 drehen, bis die Schulter 22 einen Schlitz in der Wandung der hülsenförmigen Rastsperre 4 erreicht. Der Schlitz nimmt die Schulter 22 auf, während die Rastsperre in den Aufnahmeraum 30 eingeführt werden kann.

Somit kann der Knopf 23 wieder in Pfeilrichtung 14 in Richtung der stirnseitigen Kontaktfläche 7 der Bolzenführung 3 bewegt werden bis er die Endposition nach Figur 7b einnimmt.

### Zeichnunasleaende

- 1.: Rastbolzen
- 2.: Bolzen
- 3.: Bolzenführung
- 4.: Rastsperre (Hülse)
- 5.: Achse
- 6.: Drehrichtung
- 7.: Kontaktfläche
- 8.: Nut
- 9.: Kunststoffchip
- 10.: Magnetfeldsensor (rund, punktuell)
- 11.: Ringnut
- 12.: Permanentmagnet 12'
- 13.: Abstand
- 14.: Pfeilrichtung
- 15.: Verriegelungsende
- 16.: Kunststoff
- 17.: Sensorelement
- 18.: offene Stirnseite (von 3)
- 19.: Nut
- 20.: Absatz
- 21.: Ringschulter (von 2)
- 22.: Schulter (von 23)
- 23.: Betätigungsknopf
- 24.: Unterseite
- 25.: Sensorhalter
- 26.: Nut 26'
- 27.: Sensor
- 28.: Feder
- 29.: Schraube
- 30.: Aufnahmeraum
- 31.: Betätigungsende
- 32.: Schlitz

## Patentansprüche

1. Rastbolzen (1) mit einer zylindrischen, hülsenförmigen Bolzenführung (3) und einem in der Bolzenführung (3) axial verschiebbar gelagerten Bolzen (2), der ein Verriegelungsende (15) und ein Betätigungsende (31), mit einem am Bolzen (2) angeordneten Betätigungselement, aufweist, wobei der Bolzen (2) zwischen einer ersten axialen Endposition oder einer zweiten axialen Endposition innerhalb der Bolzenführung (3) axial verschiebbar gelagert und verrastbar ist, wobei an der Bolzenführung (3) mindestens ein Sensor (27) befestigt ist, der die beiden axialen Endpositionen des Bolzens (2), durch einen mit dem Bolzen (2) mitgeführten Permanentmagneten (12), als Messgröße erfasst und daraus ein weiterverarbeitbares elektrisches, pneumatisches oder hydraulisches Signal erzeugt, **dadurch gekennzeichnet, dass** in oder an dem Betätigungselement der Permanentmagnet (12) befestigt ist, dem gegenüberliegend an der oberen Stirnseite der Bolzenführung (3) mindestens der magnetisch schaltbarer Sensor (27) zugeordnet ist.

2. Rastbolzen (1) nach Anspruch 1 **dadurch gekennzeichnet, dass** das Betätigungselement ein Betätigungsknopf (23) ist, dessen Unterseite (24) eine Ringnut (11) aufweist, in welcher ein Ringmagnet (12) aufgenommen ist.

3. Rastbolzen (1) nach Anspruch 1, **dadurch gekennzeichnet, dass** der Magnet (12) ringförmig oder segmentartig in die Unterseite (24) des Betätigungselements (23) am Betätigungsende (31) integriert ist.

4. Rastbolzen (1) nach Anspruch **1,dadurch gekennzeichnet, dass** der Sensor (27) ein induktiver Sensor ist.

5. Rastbolzen (1) mit einer zylindrischen, hülsenförmigen Bolzenführung (3) und einem in der Bolzenführung (3) axial verschiebbar gelagerten Bolzen (2), der ein Verriegelungsende (15) und ein Betätigungsende (31), mit einem am Bolzen (2) angeordneten Betätigungselement, aufweist, wobei der Bolzen (2) zwischen einer ersten axialen Endposition oder einer zweiten axialen Endposition innerhalb der Bolzenführung (3) axial verschiebbar gelagert und verrastbar ist, wobei an der Bolzenführung (3) mindestens ein Sensor (27) befestigt ist, der die beiden axialen Endpositionen des Bolzens (2), durch einen mit dem Bolzen (2) mitgeführten Permanentmagneten, als Messgröße erfasst und daraus ein weiterverarbeitbares elektrisches, pneumatisches oder hydraulisches Signal erzeugt, **dadurch gekennzeichnet, dass** als Betätigungselement ein Betätigungsknopf (23) am Betätigungsende (31) des Bolzens (2) zur Verschiebung des Bolzens (2) in.der Bolzenführung (3) montiert ist, und dass der Betätigungsknopf (23) zumindest teilweise aus einem magnetischen Material gebildet ist, dem gegenüberliegend an der oberen Stirnseite der Bolzenführung (3) der magnetisch schaltbare Sensor (27) zugeordnet ist.

6. Rastbolzen (1) nach Anspruch 5, **dadurch gekennzeichnet, dass** der Betätigungsknopf (23) in einem Sinterverfahren und/oder einem Spritzgussverfahren hergestellt ist.

7. Rastbolzen (1) mit einer zylindrischen, hülsenförmigen Bolzenführung (3) und einem in der Bolzenführung (3) axial verschiebbar gelagerten Bolzen (2), der ein Verriegelungsende (15) und ein Betätigungsende (31), mit einem am Bolzen (2) angeordneten Betätigungselement, aufweist, wobei der Bolzen (2) zwischen einer ersten axialen Endposition oder einer zweiten axialen Endposition innerhalb der Bolzenführung (3) axial verschiebbar gelagert und verrastbar ist, wobei an der Bolzenführung (3) mindestens ein Sensor (27) befestigt ist, der die beiden axialen Endpositionen des Bolzens (2), durch einen mit dem Bolzen (2) mitgeführten Permanentmagneten (12'), als Messgröße erfasst und daraus ein weiterverarbeitbares elektrisches, pneumatisches oder hydraulisches Signal erzeugt, **dadurch gekennzeichnet, dass** der Permanentmagnet (12') zur Schaltung des Sensors (27) im Innenraum der Bolzenführung (3) im Bereich einer Ringschulter (21) am Außenumfang des Bolzens (2), mit dem axial verschiebbaren Bolzen (2) verbunden ist und der Sensor (27) sich in einer Nut im mittleren Bereich der hülsenförmigen Bolzenführung (3) befindet.

8. Rastbolzen (1) nach einem der Ansprüche 1 bis 7, **dadurch gekennzeichnet, dass** der Sensor (27) in einem Sensorhalter (17, 25) eingebettet ist, der die Bolzenführung (3) zumindest teilweise ringförmig umgibt.

9. Rastbolzen (1) nach einem der Ansprüche 1 bis 6, **dadurch gekennzeichnet, dass** der Sensor (27) in einem ringförmigen Sensorhalter (17, 25) im Bereich einer umlaufenden Ringnut (26, 26') befestigt ist.

10. Rastbolzen (1) nach einem der Ansprüche 1 bis 9, **dadurch gekennzeichnet, dass** als Betätigungselement ein Betätigungsknopf (23) am Betätigungsende (31) des Bolzens (2) zur Verschiebung des Bolzens (2) in der Bolzenführung (3) montiert ist und der Rastbolzen (1) eine Rastsperre (4) aufweist, um den Betätigungsknopf (23) in einer Endposition zu fixieren.

11. Rastbolzen (1) nach Anspruch 10, **dadurch gekennzeichnet, dass** der Betätigungsknopf (23) eine Schulter (22) aufweist, die einen zylindrischen Aufnahmeraum (30) im Inneren des Betätigungsknopfes abschnittsweise unterbricht, der zur Aufnahme der hülsenförmig ausgebildeten Rastsperre (4) dient, wenn der Rastbolzen (1) in Verriegelungsposition ist.

12. Rastbolzen (1) nach Anspruch 10, **dadurch gekennzeichnet, dass** die Schulter (22) auf der Stirnseite der hülsenförmig ausgebildeten Rastsperre (4) aufliegt, wenn der Bolzen (1) aus der Bolzenführung (3) hinausgezogen ist.

13. Rastbolzen nach Anspruch 11, **dadurch gekennzeichnet, dass** die Wandung der hülsenförmigen Rastsperre (4) einen axialen Schlitz (32) zur Aufnahme der Schulter (22) aufweist.

14. Rastbolzen (1) nach Anspruch 10 oder 11, **dadurch gekennzeichnet, dass** sich ein Sensor auf dem stirnseitigen Endbereich der hülsenförmigen Rastsperre (4) befindet und ein Magnet im Bereich der Schulter (22) angeordnet ist, um ein Aufliegen der Schulter (22) zu erkennen, um somit die Endposition des Rastbolzens (1) zu bestimmen.

15. Rastbolzen (1) nach Anspruch 10 oder 11, **dadurch gekennzeichnet, dass** ein Positionssensor oder Drehwinkelsensor im Bereich der Rastsperre (4) die Drehposition des Betätigungsknopfes bestimmt.

## Claims

1. Locking bolt (1) having a cylindrical, sleeve-like bolt guide (3) and a bolt (2) mounted to be axially displaceable in the bolt guide (3) and which has a locking end (15) and an actuating end (31), with an actuating element arranged on the bolt (2), wherein the bolt (2) is mounted to be axially displaceable between a first axial end position or a second axial end position within the bolt guide (3) and can be locked, wherein at least one sensor (27), which records as a measured variable the two axial end positions of the bolt (2) by means of a permanent magnet (12) carried along with the bolt (2), is attached to the bolt guide (3) and generates therefrom an electrical, pneumatic or hydraulic signal which can be further processed, **characterised in that** the permanent magnet (12), to which lying opposite on the upper end-face side of the bolt guide (3) at least the sensor (27) which can be switched magnetically is assigned, is attached in or on the actuating element.

2. Locking bolt (1) according to claim 1, **characterised in that** the actuating element is an actuating button (23), the underside (24) of which has an annular groove (11), in which an annular magnet (12) is accommodated.

3. Locking bolt (1) according to claim 1, **characterised in that** the magnet (12) is integrated like a ring or like a segment into the underside (24) of the actuating element (23) on the actuating end (31).

4. Locking bolt (1) according to claim 1, **characterised in that** the sensor (27) is an inductive sensor.

5. Locking bolt (1) having a cylindrical, sleeve-like bolt guide (3) and a bolt (2) mounted to be axially displaceable in the bolt guide (3) and which has a locking end (15) and an actuating end (31), with an actuating element arranged on the bolt (2), wherein the bolt (2) is mounted to be axially displaceable between a first axial end position or a second axial end position within the bolt guide (3) and can be locked, wherein at least one sensor (27), which records as a measured variable the two axial end positions of the bolt (2) by means of a permanent magnet carried along with the bolt (2), is attached to the bolt guide (3) and generates therefrom an electrical, pneumatic or hydraulic signal which can be further processed, **characterised in that** as the actuating element, an actuating button (23) is mounted on the actuating end (31) of the bolt (2) to displace the bolt (2) in the bolt guide (3), and **in that** the actuating button (23) is formed at least partly from a magnetic material, to which lying opposite on the upper end-face side of the bolt guide (3) the sensor (27) which can be switched magnetically is assigned.

6. Locking bolt (1) according to claim 5, **characterised in that** the actuating button (23) is manufactured in a sintering process and/or an injection-moulding process.

7. Locking bolt (1) having a cylindrical, sleeve-like bolt guide (3) and a bolt (2) mounted to be axially displaceable in the bolt guide (3) and which has a locking end (15) and an actuating end (31), with an actuating element arranged on the bolt (2), wherein the bolt (2) is mounted to be axially displaceable between a first axial end position or a second axial end position within the bolt guide (3) and can be locked, wherein at least one sensor (27), which records as a measured variable the two axial end positions of the bolt (2) by means of a permanent magnet (12') carried along with the bolt (2), is attached to the bolt guide (3) and generates therefrom an electrical, pneumatic or hydraulic signal which can be further processed, **characterised in that** the permanent magnet (12') is connected to the axially displaceable bolt (2) to connect the sensor (27) in the interior of the bolt guide (3) in the region of an annular shoulder (21) on the outer circumference of the bolt (2) and the sensor (27) is located in a groove in the central region of the sleeve-like bolt guide (3).

8. Locking bolt (1) according to one of claims 1 to 7, **characterised in that** the sensor (27) is embedded in a sensor holder (17, 25) which at least partly surrounds the bolt guide (3) like a ring.

9. Locking bolt (1) according to one of claims 1 to 6, **characterised in that** the sensor (27) is attached in a ring-like sensor holder (17, 25) in the region of a surrounding annular groove (26, 26').

10. Locking bolt (1) according to one of claims 1 to 9, **characterised in that** as the actuating element, an actuating button (23) is mounted on the actuating end (31) of the bolt (2) to displace the bolt (2) in the bolt guide (3) and the locking bolt (1) has a locking stop (4) in order to fix the actuating button (23) in an end position.

11. Locking bolt (1) according to claim 10, **characterised in that** the actuating button (23) has a shoulder (22) which interrupts in sections a cylindrical receiving space (30) in the interior of the actuating button which serves to receive the locking stop (4) formed like a sleeve when the locking bolt (1) is in locking position.

12. Locking bolt (1) according to claim 10, **characterised in that** the shoulder (22) rests on the end-face side of the locking stop (4) formed like a sleeve when the bolt (1) is withdrawn from the bolt guide (3).

13. Locking bolt according to claim 11, **characterised in that** the wall of the sleeve-like locking stop (4) has an axial slot (32) to receive the shoulder (22).

14. Locking bolt (1) according to claim 10 or 11, **characterised in that** a sensor is located on the end face-side end region of the sleeve-like locking stop (4) and a magnet is arranged in the region of the shoulder (22) in order to detect resting of the shoulder (22) in order to thus determine the end position of the locking bolt (1).

15. Locking bolt (1) according to claim 10 or 11, **characterised in that** a position sensor or angle of rotation sensor in the region of the locking stop (4) determines the rotary position of the actuating button.

## Revendications

1. Boulon d'arrêt (1) comprenant un guide de boulon cylindrique en forme de manchon (3) et un boulon (2) supporté de manière mobile axialement dans le guide de boulon (3), qui présente une extrémité de verrouillage (15) et une extrémité d'actionnement (31), comprenant un élément d'actionnement disposé en le boulon (2), dans lequel le boulon (2) est supporté à l'intérieur du guide de boulon (3) de manière mobile axialement et apte à être arrêté entre une première position d'extrémité axiale ou une deuxième position d'extrémité axiale, dans lequel au moins un capteur (27) est fixé au guide de boulon (3), qui détecte les deux positions d'extrémité axiale du boulon (2) grâce à un aimant permanent (12) entraîné avec le boulon (2) en tant que grandeur de mesure et génère à partir de celle-ci un signal électrique, pneumatique ou hydraulique apte à être traité, **caractérisé en ce que** dans ou en l'élément d'actionnement est fixé l'aimant permanent (12) en face duquel est associé, du côté frontal supérieur du guide de boulon (3), au moins le capteur à commande magnétique (27).

2. Boulon d'arrêt (1) selon la revendication 1, **caractérisé en ce que** l'élément d'actionnement est un bouton d'actionnement (23) dont le côté inférieur (24) présente une rainure annulaire (11) dans laquelle est logé un aimant annulaire (12).

3. Boulon d'arrêt (1) selon la revendication 1, **caractérisé en ce que** l'aimant (12) est intégré, en forme d'anneau ou à la manière d'un segment, dans le côté inférieur (24) de l'élément d'actionnement (23) en l'extrémité d'actionnement (31).

4. Boulon d'arrêt (1) selon la revendication 1, **caractérisé en ce que** le capteur (27) est un capteur inductif.

5. Boulon d'arrêt (1) comprenant un guide de boulon cylindrique en forme de manchon (3) et un boulon (2) supporté de manière mobile axialement dans le guide de boulon (3), qui présente une extrémité de verrouillage (15) et une extrémité d'actionnement (31), comprenant un élément d'actionnement disposé en le boulon (2), dans lequel le boulon (2) est supporté à l'intérieur du guide de boulon (3) de manière mobile axialement et apte à être arrêté entre une première position d'extrémité axiale ou une deuxième position d'extrémité axiale, dans lequel au moins un capteur (27) est fixé au guide de boulon (3), qui détecte les deux positions d'extrémité axiale du boulon (2) grâce à un aimant permanent entraîné avec le boulon (2) en tant que grandeur de mesure et génère à partir de celle-ci un signal électrique, pneumatique ou hydraulique apte à être traité, **caractérisé en ce que** un bouton d'actionnement (23) est monté à l'extrémité d'actionnement (31) du boulon (2) en tant qu'élément d'actionnement pour déplacer le boulon (2) dans le guide de boulon (3), et **en ce que** le bouton d'actionnement (23) est formé au moins partiellement d'un matériau magnétique, en face duquel est associé, du côté frontal supérieur du guide de boulon (3), le capteur à commande magnétique (27).

6. Boulon d'arrêt (1) selon la revendication 5, **caractérisé en ce que** le bouton d'actionnement (23) est fabriqué dans un procédé de frittage et/ou un procédé de moulage par injection.

7. Boulon d'arrêt (1) comprenant un guide de boulon cylindrique en forme de manchon (3) et un boulon (2) supporté de manière mobile axialement dans le guide de boulon (3), qui présente une extrémité de verrouillage (15) et une extrémité d'actionnement (31), comprenant un élément d'actionnement disposé en le boulon (2), dans lequel le boulon (2) est supporté à l'intérieur du guide de boulon (3) de manière mobile axialement et apte à être arrêté entre une première position d'extrémité axiale ou une deuxième position d'extrémité axiale, dans lequel au moins un capteur (27) est fixé au guide de boulon (3), qui détecte les deux positions d'extrémité axiale du boulon (2) grâce à un aimant permanent (12') entraîné avec le boulon (2) en tant que grandeur de mesure et génère à partir de celle-ci un signal électrique, pneumatique ou hydraulique apte à être traité, **caractérisé en ce que** l'aimant permanent (12') est relié au boulon mobile axialement (2) dans la zone d'un épaulement annulaire (21) à la circonférence extérieure du boulon (2) pour la commande du capteur (27) à l'intérieur du guide de boulon (3), et le capteur (27) se trouve dans une rainure dans la zone centrale du guide de boulon en forme de manchon (3).

8. Boulon d'arrêt (1) selon l'une des revendications 1 à 7, **caractérisé en ce que** le capteur (27) est encastré dans un porte-capteur (17, 25) qui entoure le guide de boulon (3) au moins partiellement suivant une forme annulaire.

9. Boulon d'arrêt (1) selon l'une des revendications 1 à 6, **caractérisé en ce que** le capteur (27) est fixé dans un porte-capteur annulaire (17, 25) dans la zone d'une rainure annulaire périphérique (26, 26').

10. Boulon d'arrêt (1) selon l'une des revendications 1 à 9, **caractérisé en ce qu'un** bouton d'actionnement (23) est monté en tant qu'élément d'actionnement à l'extrémité d'actionnement (31) du boulon (2) pour déplacer le boulon (2) dans le guide de boulon (3) et le boulon d'arrêt (1) présente un cran d'arrêt (4) pour immobiliser le bouton d'actionnement (23) dans une position d'extrémité.

11. Boulon d'arrêt (1) selon la revendication 10, **caractérisé en ce que** le bouton d'actionnement (23) présente un épaulement (22) qui interrompt par sections un espace de logement cylindrique (30) à l'intérieur du bouton d'actionnement (23), qui sert à loger le cran d'arrêt formé en forme de manchon (4) quand le boulon d'arrêt (1) est en position de verrouillage.

12. Boulon d'arrêt (1) selon la revendication 10, **caractérisé en ce que** l'épaulement (22) est en appui du côté frontal du cran d'arrêt formé en forme de manchon (4) quand le boulon (1) est tiré hors du guide de boulon (3).

13. Boulon d'arrêt (1) selon la revendication 11, **caractérisé en ce que** la paroi du cran d'arrêt en forme de manchon (4) présente une fente axiale (32) pour loger l'épaulement (22).

14. Boulon d'arrêt (1) selon la revendication 10 ou 11, **caractérisé en ce qu'**un capteur se trouve sur la zone d'extrémité côté frontal du cran d'arrêt en forme de manchon (4) et un aimant est disposé dans la zone de l'épaulement (22) pour reconnaître un appui de l'épaulement (22), pour déterminer ainsi la position d'extrémité du boulon d'arrêt (1).

15. Boulon d'arrêt (1) selon la revendication 10 ou 11, **caractérisé en ce qu'**un capteur de position ou capteur d'angle de rotation détermine la position de rotation du bouton d'actionnement dans la zone du cran d'arrêt (4).
